# EUROPEAN PATENT SPECIFICATION

(11) **EP 1 906 339 B1**
(45) Date of publication and mention of the grant of the patent: **13.01.2016**
(21) Application number: 06018335.7
(22) Date of filing: 01.09.2006
(51) Int. Cl.: G01C 21/30, G06K 9/00, G06K 9/46, G06T 7/00

(54) **Method for recognizing an object in an image and image recognition device**
Verfahren zur Erkennung eines Objekts auf einem Bild und Bilderkennungsvorrichtung
Procédé pour reconnaître un objet dans une image et dispositif de reconnaissance d'image

(43) Date of publication of application: 02.04.2008
(73) Proprietor: Harman Becker Automotive Systems GmbH, 76307 Karlsbad (DE)
(72) Inventor: Bergmann, Stephan, 76464 Muggensturm (DE); Mohr, Ulrich, 76131 Karlsruhe (DE)
(74) Representative: Bertsch, Florian Oliver

(56) References cited:
- EP-A1- 1 304 607
- WO-A1-2006/080547
- HEIMES F ET AL: "Automatic generation of intersection models from digital maps for vision-based driving on inner city intersections" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3 October 2000 (2000-10-03), pages 498-503, XP010528986 ISBN: 0-7803-6363-9
- GENGENBACH V ET AL: "Model-based recognition of intersections and lane structures" INTELLIGENT VEHICLES '95 SYMPOSIUM., PROCEEDINGS OF THE DETROIT, MI, USA 25-26 SEPT. 1995, NEW YORK, NY, USA,IEEE, US, 25 September 1995 (1995-09-25), pages 512-517, XP010194170 ISBN: 0-7803-2983-X

## Description

The present invention relates to a method for recognizing an object in an image and a corresponding image recognition device, in particular to a method and device that may be employed for identifying elements related to navigation purposes, such as roads or related structures, in an image.

### Background Art

Image recognition is widely practiced, including in automotive environments. In particular, image recognition in automotive systems may be advantageously employed for various purposes including navigation or aiding the driver in controlling a vehicle. For these purposes, images of a neighborhood of the vehicle are recorded, frequently by a camera onboard a vehicle, and/or analyzed in order to identify objects, such as roads or road edges, that may be of relevance for navigation purposes or for controlling the vehicle. In the context of this application, the term "identifying an object" includes identifying an object type and an object position, but may also include identifying additional object parameters, such as object size or object orientation. Once an object has been identified or recognized in an image, specific processes may be invoked based on the type and position of the recognized object. For example, the driver of a vehicle may be alerted of an upcoming junction or intersection once the junction or intersection has been identified in the image.

Methods and devices that are presently employed for identifying or recognizing an object in an image suffer from the drawback that they are frequently slow and inaccurate. This drawback is of particular relevance if not only a single image is to be analyzed, but if rather a video camera continuously records a series of images at short intervals, each of which has to be analyzed for navigation purposes. This may be the case, e.g., if the video camera is installed onboard a vehicle, and if it is desirable to evaluate the stream of images in real time.

EP 1 304 607 A1 describes a lane recognition system. Information on lane marker types is stored in a database and is used for lane marker recognition.

WO 2006/080547 A1, which serves as basis for the preamble of the independent claims, describes an image recognizing apparatus which uses stored land object information for object recognition and position determination.

F. Heimes et al., "Automatic Generation of Intersection Models from Digital Maps for Vision-Based Driving on Innercity Intersection", Proceedings of the IEEE Intelligent Vehicles Symposium 2000, IEEE, Piscataway, USA, 3 October 2000 and V. Gegenbach et al., "Model-based recognition of intersections and lane structures", Proceedings of the IEEE Intelligent Vehicles '95 Symposium, IEEE, New York, USA, 25 September 1995 describe techniques for applying object recognition in vehicle systems.

There is a need in the art for an improved method for recognizing an object in an image and an image recognition device. In particular, there is a need in the art for such a method and device that has an improved recognition accuracy and/or an enhanced recognition speed.

### Summary of the Invention

According to the present invention, this need is addressed by the method for recognizing an object in an image, an image recognition device, and a navigation system as defined in the independent claims. The dependent claims define preferred or advantageous embodiments of the invention.

A method for recognizing an object in an image comprises the steps of retrieving image data corresponding to the image, retrieving digital map information which comprises map information on at least a portion of an area represented by the image and which comprises information on the object, and analyzing the image data and the digital map information to recognize the object. The image data may be retrieved directly from a camera or a video camera or may be read from a storage unit or a memory unit on which the image data is stored. Similarly, the digital map information may be retrieved from any suitable storage unit or memory unit. Since both the image data and the digital map information are analyzed to recognize the object, it is, in particular, possible to analyze the image data to recognize the object and subsequently verify, based on the digital map information, that the object has been identified correctly, thereby improving recognition accuracy. Further, it is also possible to make a prediction, based on the digital map information, on where in the image an object having a specific shape or size or similar may be found. Thereby, the speed and accuracy of identifying an object in an image is improved.

The step of evaluating the image data and the digital map information may include a step of evaluating the image data to first preliminarily recognize the object and, subsequently, verifying based on the digital map information that the object has been correctly recognized. In particular, the information on the object comprised by the digital map information may include information on at least one property of the object, and the step of evaluating the image data and the digital map information may include a step of evaluating the image data to recognize the object, then determining the property of the object recognized in the image data, and subsequently comparing the property of the object recognized in the image data with the digital map information. The property of the object may, e.g., be one or several of a position, a shape or an orientation of the object. Based on the result of the comparison of the property of the object derived from the image data and the corresponding information comprised by the digital map information, the object identification may be verified. Since, according to these embodiments, the digital map information is employed for verifying an object that has previously preliminarily been recognized in the image data, it is possible for the image data to be evaluated by any standard algorithm known in the art. It is to be understood that the term "evaluating the image data" as used herein includes any standard algorithm used for analyzing image data and may, e.g., include filtering the image data in various ways, for example by calculating the convolution of the image data and a suitable filter.

An example of prediction of at least one property of the object does not form part of the present invention.

The step of evaluating the image data and the digital map information may also include employing the digital map information to facilitate evaluating the image data to recognize the object. In particular, the digital map information may be employed to predict at least one property of the object in the image, and the evaluation of the image data may consequently be focused or concentrated according to the property predicted based on the digital map information. In particular, the predicted property of the object may be employed to assign probabilities that structures in the image are the object to be recognized. The property of the object may, e.g., be one or several of a position, a shape or an orientation of the object in the image. Since a specific property of the object is predicted based on the digital map information, the evaluation of the image data may be sped up, thus increasing the speed and accuracy of recognizing the object in the image.

The information on the object comprised by the digital map information includes information on the position of the object, such that the evaluation of the image data is restricted to a sub-portion or a specific region of the image data that is selected based on the information on the object position.

In other words, the digital map information may be harnessed to predict the likelihood that specific types of objects, such as roads, lane markers, road junctions or road crossings may be found in specific portions of the image, so that it is sufficient to analyze only those portions of the image in which the respective object is found with high probability. Further, the information on the object comprised by the digital map information may also include information on a shape and/or an orientation of the object, and the evaluation of the image data may be restricted to identifying objects having shapes and/or orientations selected based on the information on the shape and/or orientation of the object provided by the digital map information. By employing the digital map information to also predict, to a certain extent, the shape and/or orientation of the object in the image, structures that have totally different shapes and/or orientation may be readily discarded when analyzing the image, thereby further improving recognition speed and accuracy.

The evaluation of the image data and the digital map information to recognize the object may also include comparing a model of the object with the image data. The model of the object may have at least one variable parameter, based on which the shape, position, orientation or any other property of the object in the image may be varied, in which case the evaluation of the image data includes finding an optimum value or a close to optimum value for the at least one variable parameter. By providing generic models having at least one variable parameter for various object types, different structures in the image may be reliably recognized. For example, a straight section of a road may be modeled, in plan view, by a pair of essentially parallel straight lines which, in the perspective view of the image, translates to a pair of converging lines. Typical parameters for a straight section of a road include the width of the road and the offset position of the camera taking the image relative to the center of the road. The optimum value for the at least one variable parameter may be found using any suitable algorithm. In particular, if not only a single image is to be analyzed, but rather a quasi-continuous stream of images recorded by a video camera is to be analyzed, it being desirable to track a structure once recognized, Bayes filtering or particle filtering may be employed to determine the optimum value for the at least one variable parameter.

Since it is anticipated that a main field of application of the present invention will be in navigation systems, the digital map information may advantageously be retrieved from a navigation system that naturally includes a digital map, e.g., stored on a CD-ROM, a DVD, an internal hard disk of the navigation system or any other suitable storage unit. It should be noted that, while the digital map information stored in a navigation system, may include information on the shape and/or orientation of specific objects, e.g., on the orientation of individual road segments, for many other objects included in the digital map, such as traffic signs, the digital map information only includes a qualifier specifying the type of the object, e.g. stop sign. It is to be understood that, even in the latter case, the digital map information at least implicitly includes information on the shape of the object, since the information on the object type stored in the digital map information may be combined with additional information so as to predict the shape of the object in the image.

The method may further comprise the step of determining a current vehicle position and a current vehicle orientation, and the retrieving of the digital map information is then based on the current vehicle position and the current vehicle orientation. Since the vehicle position and the vehicle orientation are sufficient to predict a portion of the map in which the field of view of the camera will be contained, at least if the position and orientation of the camera relative to the longitudinal and transversal axes of the vehicle are known, it is thereby possibly to retrieve the portion of the digital map only that is indeed required for recognizing the object in the image.

The method may further comprise the step of recording the image that is to be analyzed, the image showing a neighborhood of a vehicle. This may conveniently be achieved, e.g., by a camera that is installed onboard a vehicle. Thereby, the method according to the present invention may be harnessed for navigation purposes, since images may be analyzed immediately after recording.

The method further includes the step of providing a result of the recognizing the object to a navigation system. Thereby it is possible to advantageously harness the results of the image recognition for navigation purposes, such as providing driving instructions to a driver, alerting a driver, or controlling a vehicle based on the result of the evaluation of the image data and the digital map information. For example, since image recognition will frequently provide more accurate results on close-by objects than map data, it is anticipated that the provision of driving instructions to the driver of the vehicle may be improved based on the results of the image recognition. However, it is anticipated that the results of recognizing the object in the image may be also employed for a wide variety of other applications.

The object to be recognized in the image may be selected from a wide variety of different objects. In one embodiment of the present invention, the object is selected from a group comprising a road intersection, a road turnoff, and a traffic sign. By recognizing objects having one of these object types, many navigation applications are conceivable.

According to another aspect of the present invention, an image recognition device for recognizing an object in an image is provided, which comprises memory means for storing image data corresponding to the image to be analyzed and for storing digital map information, the digital map information comprising map information on at least a portion of the area represented by the image and further comprising information on the object, and processing means which retrieve image data and digital map information from the memory means and evaluate the image data and the digital map information to recognize the object. The memory means for storing the image data and the digital map information may be a single physical storage device, or may be two or several different storage entities. For example, the image data could be stored in a first storage unit, and the digital map information could be stored in a second storage unit. In this case, one or both of the first and second storage units may be integrated with another system or device provided onboard a vehicle, such as a navigation system. For example, it is anticipated that the digital map information that is retrieved by the processing means may be stored in the storage unit of a navigation system, while the image data may be stored in a separately provided storage unit that is a dedicated unit for the image recognition device. In this case, the memory means include both the storage unit of the navigation system and the dedicated storage unit of the image recognition device, which latter stores the image data. Importantly, the processing means evaluate both the image data and the digital map information in order to recognize the object. Since the digital map information is taken into consideration for evaluating the image data, the advantages described with reference to the method according to the present invention may be harnessed. In particular, the image recognition device according to the present invention allows both the accuracy and the speed of image recognition to be enhanced.

The processing means may be adapted such that it evaluates the image data to preliminarily recognize the object and subsequently verifies, based on the digital map information, that the object has been correctly recognized. I.e., the results of evaluating the image data are cross-checked based on the digital map information. By contrast, if the digital map information is not consistent with the preliminarily identified object, the preliminarily identified object will be discarded. More specifically, the information on the object comprised by the digital map information may include information on at least one property of the object, and the processing means may analyze the image data to preliminarily recognize the object, may then determine the corresponding property of the preliminarily recognized object from the image data, and may subsequently compare the corresponding property of the preliminarily identified object of the image data with the corresponding property stored in the digital map information. In this process, probabilities may be assigned that preliminarily recognized objects indeed are the object to be recognized, based on the result of the comparison. In particular, the property of the object may be one or several of a position, a shape or an orientation of the object. Thereby, it is possible for the image recognition device to cross-check results of preliminary object recognition, that is based on image data only, with digital map information.

The processing means may also employ the digital map information to facilitate evaluating the image data to recognize the object. In particular, the processing means may employ the digital map information to predict a property of the object in the image and may subsequently analyze the image data based on the predicted property of the object. This analysis may include assigning probabilities that structures in the image having a specific property indeed correspond to the object to be recognized, based on the predicted property. Again, the property of the object may be, e.g., one or several of a position, a shape, or an orientation of the object. In particular, the information on the object comprised by the digital map information includes information on the position of the object, and the processing means then analyzes a sub-portion of the image data that is selected based on the information on the position of the object comprised by the digital map information. I.e., if a specific type of object is to be recognized in the image, the processing means may first determine from the digital map information in which portions of the image it is likely to retrieve an object having this specific object type, and may subsequently analyze only those sub-portions of the image data in which the likelihood of finding an object having the specific object type exceeds a predetermined threshold. Since the amount of data to be analyzed is thereby reduced, the speed at which the task of identifying the object may be carried out is enhanced. Further, since the evaluation of the image data discards all regions of the image in which it is very unlikely that an object of the specific type may be found, the probability for incorrect identification of the object is also decreased, thereby improving recognition accuracy. Further, the information on the object comprised by the digital map information may also include information on the shape and/or orientation of the object, and the processing means may therefore analyze the image data in view of identifying objects having specific shapes and/or orientations that are selected based on the information on the shape and/or orientation of the object. In particular, since all structures having shapes and/or orientations very different from the ones predicted for the object based on the digital map information may be discarded, the speed and accuracy of image recognition may be further improved.

The processing means may compare a model of the object with the image data to recognize the object. The data required for characterizing the model may also be stored in the memory means, or yet another storage unit may be provided for this purpose. The model of the object may have at least one variable parameter, in which case the processing means finds an optimum or close to optimum value for the at least one variable parameter by comparing the model with the image data. In particular, a Bayes filter or a particle filter may be employed to determine this optimum value for the at least one variable parameter. As regards the advantages associated with recognizing the object based on a model, reference is made to the above description of the method according to the present invention.

The device may also comprise position determining means for determining a current vehicle position and orientation determining means for determining a current vehicle orientation, which position and orientation determining means are coupled to the processing means, which latter is adapted to select a portion of the digital map information based on the current vehicle position and orientation. As explained above, the current vehicle position and orientation are sufficient to identify the portion of a digital map that corresponds to the field of view shown by the image. While dedicated position and orientation determining means may be provided in the image recognition device, it is anticipated that the image recognition device may also be coupled to position and orientation determining means provided in another system or device onboard the vehicle. For example, it is anticipated that, if the image recognition device is used in combination with a navigation system, the processing means of the image recognition device is coupled to the position and orientation determining means of the navigation system, so that no separate orientation and position determining means have to be provided in the image recognition device. However, it should be emphasized that separate position and orientation determining means may be provided in the image recognition device, in which case the image recognition device may form an autonomous unit.

The image recognition device also comprises a camera unit installed in a vehicle for recording the image in which the object is to be recognized, the camera unit being coupled to the memory means and, possibly, the processing means, for providing the image. Thereby, it is possible that a quasi-continuous stream of new images showing a changing environment may be analyzed. It should be noted that, as used herein, the term "camera" is understood to include not only cameras suitable for taking individual pictures, but also video cameras.

Preferably, the image recognition device is adapted to perform the method for recognizing an object in an image according to the various embodiments of the present invention, as described above.

According to yet another aspect of the present invention, a navigation system and image recognition device assembly is provided, which comprises the image recognition device according to any one aspect or embodiment of the present invention as described above. By integrating the image recognition device into the navigation system, various advantages are achieved. On the one hand, the image recognition device may readily access digital map information that is stored in most navigation systems. Further, the image recognition device may also readily access information that is provided by other componentry of the navigation system, such as position determining means that may include, e.g., a GPS receiver or a gyroscopic device. Further, as indicated above, several features and functionalities of the navigation system may also benefit from the information provided by the image recognition device, so that by integrating the image recognition device into the navigation system, the functionality of the navigation system may be improved.

The navigation system may comprise a storage unit for storing a digital map, and the image recognition device may be coupled to the storage unit of the navigation system to retrieve at least a portion of the digital map therefrom. In this case, the storage unit of the navigation system may form a portion of the memory means of the image recognition device as defined above. The navigation system may further comprise an optical or acoustical output unit for outputting driving instructions or warning signals to a driver, and the driving instructions or warning signals may be output in dependence on the object recognized by the image recognition device. For example, when the road on which the vehicle is presently traveling is recognized in the image recorded by a camera onboard a vehicle, it may be possible to identify whether the vehicle approaches the edge of the road, for example because the driver of the vehicle is falling asleep. In this case, a respective warning signal may be output to the driver.

The navigation system may further comprise a position determining means for determining a current vehicle position, the image recognition device providing information on the recognized object to the position determining means, which position determining means improves the accuracy for position determining based on the information on the recognized object. The rationale underlying this construction is that information obtained by the image recognition device may be advantageously fed back into the position determining means, after the determined vehicle position of the position determining means has previously been employed for identifying the relevant map portion and has thus been harnessed for identifying the object in the image. More specifically, it is anticipated that the image recognition device is well suited for determining the distance of the vehicle from an object that is close to the vehicle with high accuracy. If this accuracy is better than the standard accuracy for determining a vehicle position achievable with conventional position determining means onboard a vehicle, such as a GPS receiver, it is possible to re-calibrate the position determining means based on the information on the recognized object provided by the image recognition device.

According to the present invention, not only image data, but also digital map information is evaluated in order to recognize an object in an image. By evaluating the digital map information, which is frequently available in convenient form; e.g., in navigation systems onboard vehicles, it is possible to enhance both the speed and the accuracy of image recognition.

While it is anticipated that the main field of application of the present invention will be navigation systems, in particular navigation systems onboard of vehicles, the present invention is not restricted thereto. Rather, the various principles of the present invention as described herein may advantageously be employed in different technical fields as well. In particular, the present invention may be applied with equal facility to any image recognition method or device in which not only an image, but also a map corresponding to the image is available for analysis.

### Brief Description of the Drawings

In the following, preferred and advantageous embodiments of the present invention will be described with reference to the accompanying drawings.

Fig. 1 is a schematic block diagram showing an image recognition device according to an embodiment of the invention that is coupled to a navigation system.

Fig. 2 is a schematic view showing a car in which an image recognition device according to the invention is installed.

Fig. 3 serves to illustrate the principles of a method according to an embodiment of the present invention, in which Fig. 3a shows an exemplary image, Fig. 3b shows a corresponding exemplary digital map, and Fig. 3c serves to illustrate the evaluation of image data based on digital map information.

Fig. 4 serves to further illustrate the method according to the embodiment of the invention for another exemplary image shown in Fig. 4a and corresponding digital map shown in Fig. 4b.

Fig. 5 serves to illustrate the method according to the embodiment of the invention for yet another exemplary image shown in Fig. 5a and corresponding digital map shown in Fig. 5b.

Fig. 6 is a flowchart schematically representing a method which may be used in an embodiment of the present invention.

Fig. 7 is a flowchart schematically representing a specific implementation of the method of Fig. 6 in more detail.

Fig. 8 is a flowchart schematically representing a method according to an example.

Fig. 9 is a flowchart representing a specific implementation of the method of Fig. 8 according to an embodiment of the invention.

Fig. 10 is a flowchart representing a method for improving position determining accuracy that may be carried out by a navigation system according to an embodiment of the invention.

### Detailed Description of Preferred Embodiments

Hereinafter, preferred or advantageous embodiments of the present invention will be described.

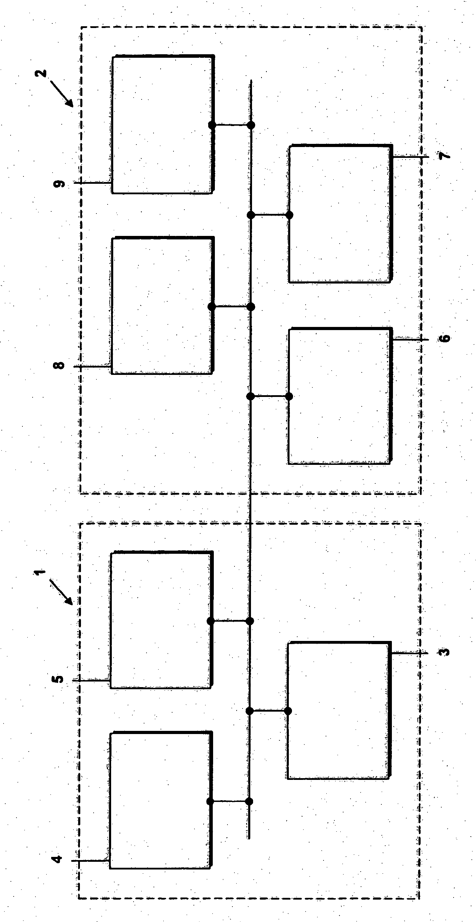

Fig. 1 shows a schematic block diagram of an image recognition device 1 according to an embodiment of the invention that is coupled to a navigation system 2. The image recognition device 1 includes processing means 3, e.g., any standard processor. The processing means 3 are coupled to a camera unit 4 and a memory means 5. In a preferred embodiment, the camera unit 4 comprises a video camera that provides images at regular time intervals, such as 25 images per second. The memory means 5 may be any suitable memory or storage unit that allows for both read and write accesses, such as RAM-type memories of DRAM or SRAM type or a hard disk. The memory means 5 preferably has sufficient storage capacity for storing both at least one image provided by the camera unit 4 and a portion of a digital map that corresponds to the region represented by the image.

In Fig. 1, the image recognition device 1 is shown to be coupled to a navigation system 2. Navigation system 2 includes all standard componentry of a navigation system, such as a processing unit or CPU 6, a storage unit 7, e.g., in the form of a CD-ROM, DVD, hard disk or other suitable storage medium, for storing a digital map, an input unit (not shown), such as a keypad, a touchscreen or a microphone, a position and orientation determining means 8 for determining a current vehicle position and orientation that may comprise, e.g., a GPS receiver and a gyroscopic device, and an output unit 9 that may provide optical or acoustical information to a driver and may comprise a display and/or a loudspeaker.

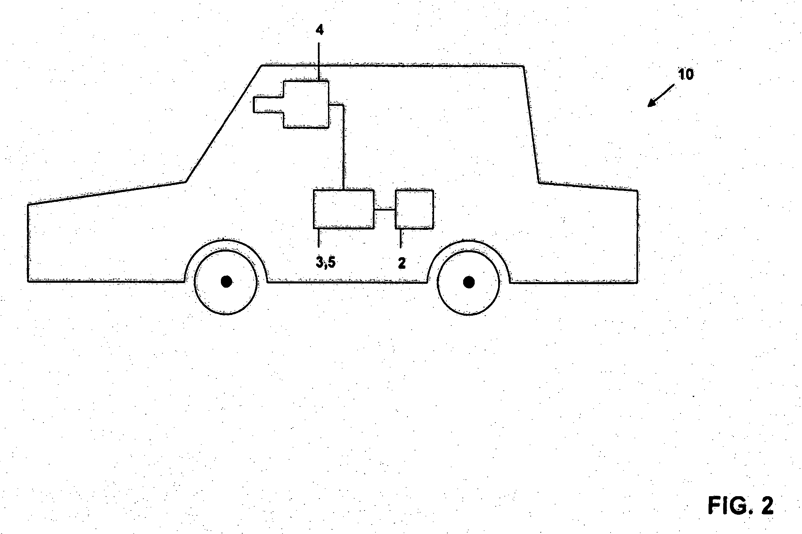

The arrangement of the componentry schematically shown in Fig. 1 in a car is illustrated by Fig. 2. As may be seen, in the state installed in a car 10, a video camera of the camera unit 4 is preferably installed at an elevated position within the car close to an upper position of the windshield, such as close to the rear view mirror or the sun visor. All other componentry schematically indicated in Fig. 1 may be installed in an arbitrary position in the car, but is preferably installed close to or in the instrument panel. The position and orientation of the video camera of the camera unit 4 is chosen in such a way that, for characteristic road width, a substantial portion of the road on which the vehicle is driving is imaged by the camera.

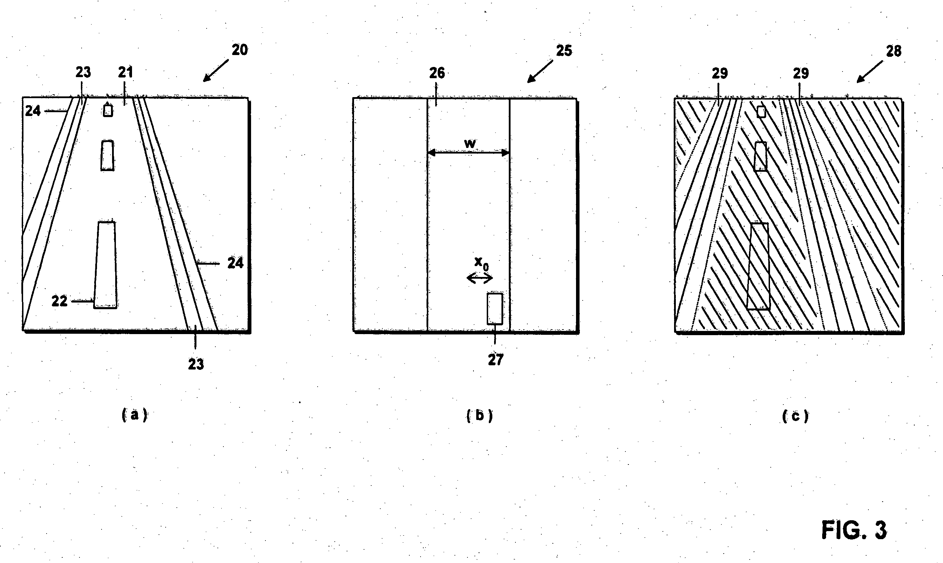

Exemplary images taken by camera unit 4 are shown in Figs. 3a, 4a and 5a, respectively, based on which the fundamental operation principles will be explained based on which image recognition device 1 is operated. The fundamental principle underlying the operation of image recognition device 1 is that digital map information is employed in order to facilitate the recognition of an object in the image.

Turning to Fig. 3a, an exemplary image 20 is shown that is recorded by camera unit 4 when the vehicle is traveling on a straight road segment. Road segment 21 is laterally bounded by road edges 24 and is provided with road markings 23 close to the road edges 24 and a central road marking 22. Typical tasks in image recognition for image 20 include identifying the road segment 21 itself, or specific structures contained in the image, such as the road edges 24 or the road markings 22, 23. In conventional methods, this task would be solved by analyzing the full image 20 in view of structures having specific geometries, such as straight lines. The task is frequently facilitated by manipulating image 20 in various ways, for example by filtering the image data. For example, in order to render vertical structures (with respect to the drawing orientation) more clearly visible, a grayscale representation of the image may be convoluted with a specific filtering function, such as the second derivative of a Gaussian curve in the horizontal direction. After this filtering, vertical structures such as the road markings 22, 23 and road edges 24 are more clearly visible and may be more readily identified. However, in these conventional methods, the full image will typically have to be evaluated, and there is no way of verifying that objects have been correctly recognized. These shortcomings are remedied by the present invention, according to which digital map information is taken into consideration for evaluating the image data.

In Fig. 3b a portion 25 of a digital map is schematically shown. The portion 25 corresponds to the field of view shown in the image 20 of Fig. 3a, i.e., there is just one straight road segment 26. Based on the output of the position determining means 8 of the navigation system 2, it is possible to identify the position of the vehicle on the road segment 26, which is schematically indicated at 27 in Fig. 3b. It should be noted that Fig. 3b is only a schematic representation indicating the information that may be available from the digital map, since digital maps are typically stored in a form in which straight road segments are represented by vectors having a given starting point, orientation, and length, as well as additional attributes. In the case of accurate maps that are based, e.g., on cadastral maps, the width w of the road segment may be explicitly stored in the digital map information. Assuming further that the uncertainty of the current vehicle position determined by the position determining means 8 is small compared to the width w of the road segment 26, the output of the position determining means 8 and the digital map information may be combined to provide an estimate for the offset x₀ of the vehicle relative to the center of the road segment. Based on the quantitative values for the width w of road segment 26 and the offset x₀, image recognition is greatly facilitated.

More particularly, as schematically illustrated in Fig. 3c, based on the width w of the road segment and the offset x₀, the processing means 3 of the image recognition device 1 is adapted to identify the regions 29 in the image 20 in which specific elements indicating the road edge, such as the road edges 24 and the road markings 23, are expected to be found. If both the offset x₀ and the road width w were precisely known, it would be possible to precisely predict the position of the road edge 24 in image 20 based on simple geometrical optics relations that involve, among other things, the position of the camera unit 4 relative to the vehicle as well as the optical characteristics of the camera unit 4, such as its focal length. Even when neither the width w of road segment 26 nor the offset x₀ are precisely known, it is still possible for the processing means 3 to determine specific regions relative to camera unit 4 in which the road edges are likely to be found. These regions, that take into account the uncertainties in determining the offset x₀ as well as in the width w of road segment 26, may be transformed to the regions 29 in image 20, employing again simple geometrical optics relations.

Since the processing means 3 are adapted to determine the regions 29 in image 20 in which specific objects are likely to be found, recognizing these objects in the image is greatly facilitated. In particular, two different modes of operation for the image recognition device 1 are conceivable.

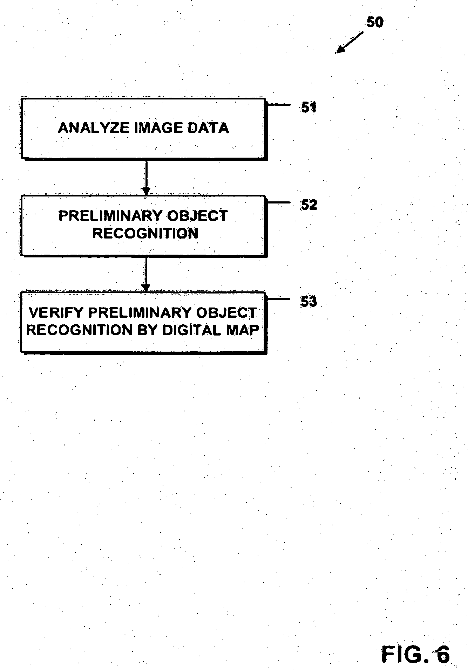

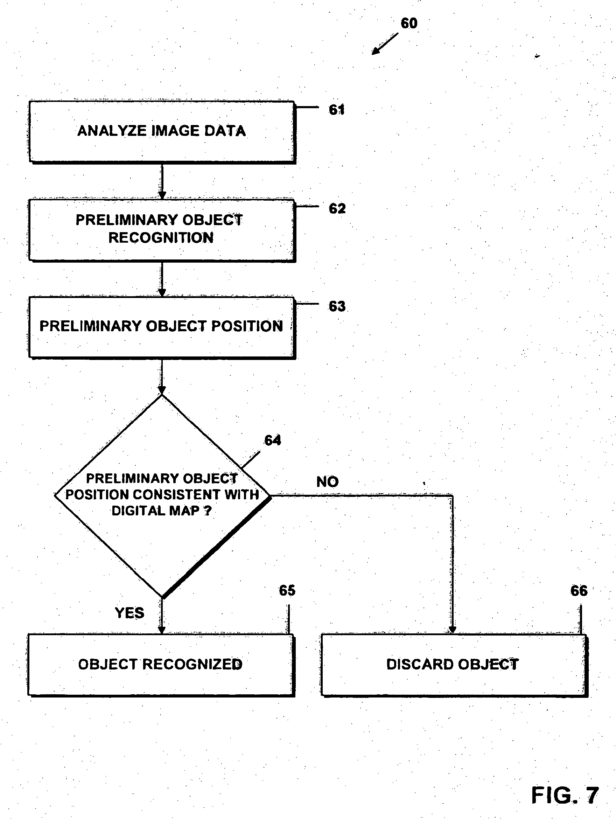

In one operation method, which will be explained in more detail with reference to Figs. 6 and 7 below, the processing means 3 analyzes the full image data 20 using conventional methods in order to preliminarily identify objects such as road edges 24 and road markings 23. As used herein, the term "identifying an object" includes, at least, identifying an object type and identifying an object position in the image. Therefore, if based on the conventional image recognition, road markings and road edges have been preliminarily identified, i.e., their position in the image has been determined, this preliminary identification is verified against the digital map information. For this purpose, the position of the preliminarily identified road edges and road markings are compared with the regions 29 in which such objects are expected to be located based on the digital map information. Objects that are found to lie outside regions 29 are discarded. Therefore, in the first mode of operation, the digital map information is employed to cross-check or verify results of a preliminary image recognition, which latter is based on the image data only.

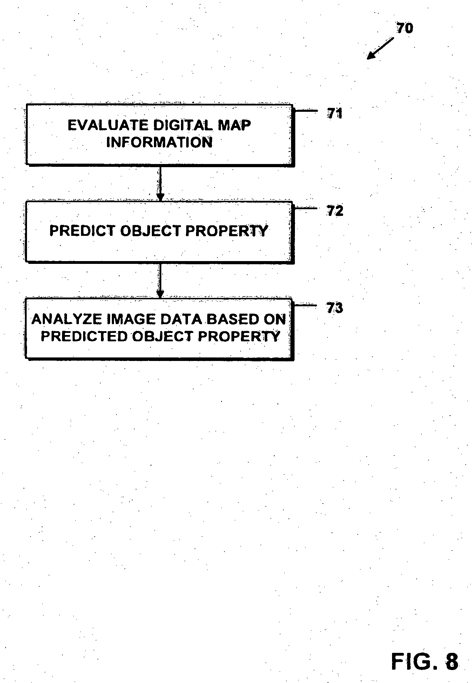

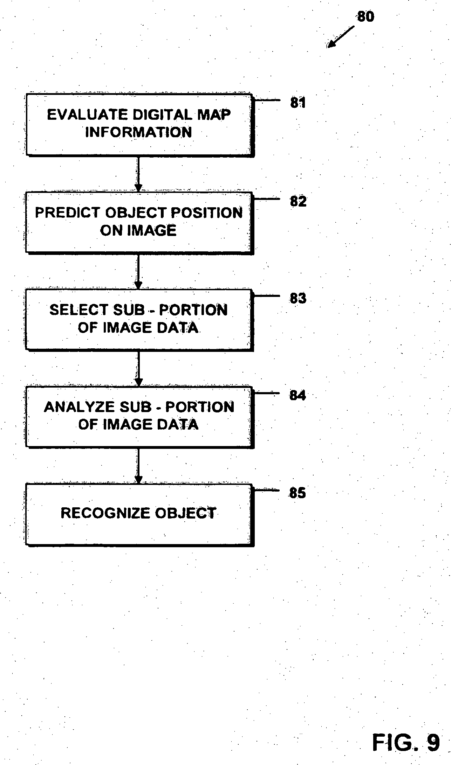

In a second mode of operation, the processing means 3 first determines the regions 29 in which the road edges 24 and road markings 23 are expected to be located. In the subsequent image recognition, portions of the image that are located outside regions 29 will be discarded, as is schematically indicated in the modified image 28 of Fig. 3c, in which these discarded regions are indicated with a diagonal line pattern. While standard image recognition algorithms may still be employed to identify the road edges 24 and road markings 23 in regions 29, the restriction to regions 29 greatly reduces the amount of data to be analyzed, thereby enhancing image recognition speed. Further, since the likelihood that other structures having geometrical features similar to road edges 24 or road markings 23 may be found and erroneously identified as such objects is smaller for regions 29 than for the full image 20, the accuracy of identifying the road edges and road markings is also improved. In other words, in the second mode of operation, which will be explained in more detail with reference to Figs. 8 and 9 below, the digital map information may be advantageously employed to predict the position or the regions, in which objects having a specific object type may be found in image 20.

It should be noted that, while regions 29 having "hard boundaries" are employed in the above exemplary description, i.e., all structures outside these regions are discarded, more general probability distributions having no sharp cut-off may also be employed in order to quantify the likelihood that a structure in the image having a specific position, shape or orientation indeed is the object to be identified. For this purpose, e.g., the position of the road edges or road markings is predicted based on the digital map, and the position of a structure identified in the image is compared with this position. The structure is assigned a probability in dependence on the comparison, i.e., the closer the position of the structure in the image to the position determined from the digital map, the higher the assigned probability that the structure indeed is the object to be recognized. The assigning of probabilities may be employed in both the first mode of operation (Figs. 6 and 7) and the second mode of operation (Figs. 8 und 9).

While the identification of an object has been explained with reference to road edges 24 and road markings 23 above, this restriction has been for clarity of explanation only. In particular, other structures such as road markings 22, the full road segment 26, or individual lanes of road segment 21 could also be recognized employing the principles outlined above.

Continuing to refer to Fig. 3, even if no digital map is available that is sufficiently accurate so as to also comprise information on the width of a road segment, even nowadays digital maps comprise road segment attributes that may advantageously be harnessed for the purposes outlined above. For example, road segments typically have an attribute specifying a road segment type, such as highway, or specifying the number of lanes in each direction. While typically not allowing one to establish the precise width of the road segment, these road segment attributes may be evaluated in order to obtain an estimate for width w.

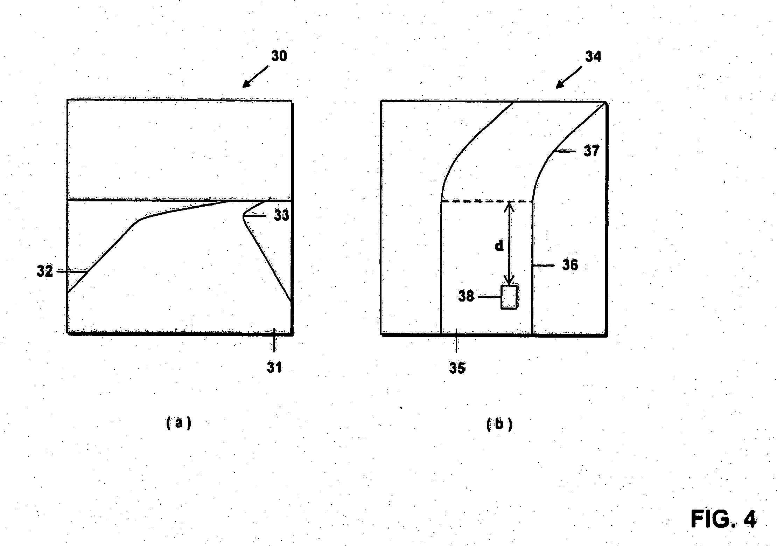

Turning next to Fig. 4, another exemplary image 30 provided by the camera unit 4 is shown, in which a road 31 comprises a straight portion 32 and a bend 33. The corresponding digital map information is schematically shown in plan view 34 of Fig. 4b, reference numeral 35 denoting the road segment in general, while 36 and 37 denote the straight portion and the bend, respectively. The vehicle position 38 has, again, only been schematically indicated. From the vehicle position determined by the position determining means 38 and the digital map information comprising information on the geometrical shape of the road 36, it is possible to determine the distance d of the vehicle from the bend. Since the digital map typically includes fairly accurate information as to the direction of the road along its longitudinal direction, the uncertainty in d is mainly due to the uncertainty in determining the vehicle position by the position determining means 8. From the distance d and the position of the camera unit relative to the vehicle, it is again possible to establish in which regions of image 30 the road edges of road segment 31 are to be expected. More specifically, it is possible to establish not only the regions in which the road edges of the straight portion 32 of road segment 31 are likely located, but to also establish in which regions of image 30 the road edges of the curved portion 33 are to be expected. Still further, with the curvature of bend 37 being known from digital map information, it is even possible to predict the shape of the road edges of curve section 33. Therefore, even for road segments that are not straight, it is possible for the processing means 3 of the image recognition device 1 to employ both modes of operation outlined above for, e.g., recognizing the edges of road segment 31 in image 30. More specifically, the digital map information 34 may be used to verify that a preliminarily identified road edge, that has been determined based only on image data 30, has been correctly recognized with a specific probability. Alternatively or additionally, the digital map information, schematically indicated at 34, may also be used to identify regions of image data 30 that need to be analyzed, since road edges are likely to be found in these regions, thereby predicting the position and shape of road edges in image 30 and facilitating the task of image recognition.

The analysis or evaluation of image data, such as images 20 or 30, typically involves comparing structures found in these images to specific models. For example, the model of road edges of a straight section of a road segment will be, in plan view, a pair of essentially parallel lines having a distance corresponding to the width of the road segment. A priori, the distance of the road edges is an unknown parameter that has to be established by analyzing the image data. Other model parameters for modeling the road edges of a straight road segment may include, e.g., the direction of the road segment relative to the direction of view of camera unit 4, and an offset position of the road edges relative to camera unit 4.

In practical implementations, recognizing road edges of a road segment in image data 20, 30 then involves determining the set of parameters such that the model optimally describes the image data. For this purpose, a figure of merit is determined for a specific set of parameters, which figure of merit describes the similarity of the model with the image data, and the set of parameters for which the corresponding model has the maximum figure of merit is established. While this may, in principle, be achieved by sampling over many different sets of parameters, the task is frequently facilitated by employing Bayes filtering or particle filtering. It should be noted that, in such cases, the digital map information frequently may provide natural constraints to the range of parameters that has to be investigated. For example, the width w of the road segment in Fig. 3 or the distance d of the vehicle from the bend in Fig. 4 allow one to restrict the corresponding model parameters substantially to a small neighborhood around the parameters established from digital map information.

While a straight road or straight road segments may be approximated by a pair of essentially parallel lines, in plan view, for a curved road as shown in Fig. 4 more complex models are required. In one example, a curved road may be approximated by a series of essentially straight road segment portions, the longitudinal axes of which may be tilted relative to one another. Alternatively, more complex models for curved roads may be employed, e.g., by approximating portions of the road as clothoid curves. Since in the present invention the digital map information is employed to facilitate evaluating the image data, it may be suitable to select the type of model employed based on the data format provided by the digital map. For example, if curved roads are stored in the form of a series of straight vectors, modeling the road as series of straight road segment portions may be suitable, while, if the digital map also employs a clothoid parameter format, modeling in terms of clothoid curves may be preferable.

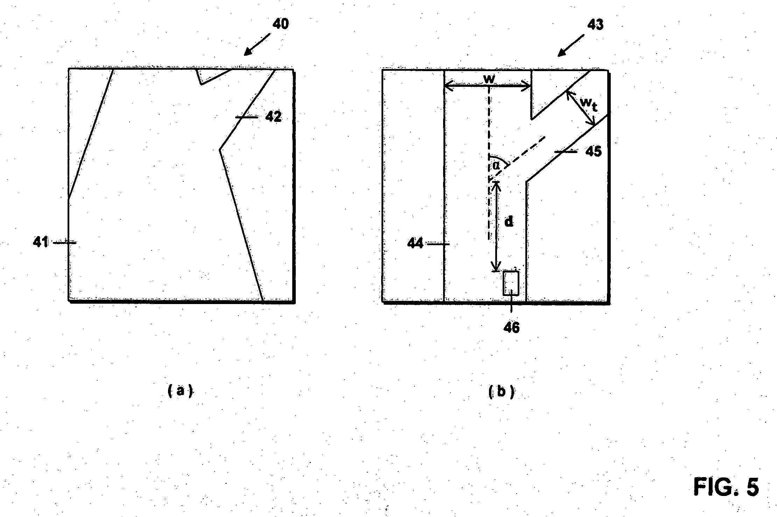

Turning to Fig. 5, yet another example of image data 40 is shown, showing a road turnoff, with road 42 turning off from road 41 on which the vehicle is currently traveling. The corresponding digital map information 43 is schematically shown in Fig. 5b in plan view, in which the various parameters that may be established from the digital map in combination with the current vehicle position 46 are schematically indicated. The roads are designated by 44 and 45. Parameters that are relevant for identifying both roads in image data 40 include the width w of road 44, the width wₜ of road 45, the distance d of the vehicle, schematically indicated at 46, from the turnoff, and the angle α at which the longitudinal axes of road 44, 45 intersect at the position of the turnoff. As should be evident from the above, all parameters schematically indicated in the digital map information 43 may advantageously be employed to facilitate the task of recognizing road edges in image data 40, based on either one of the operation modes of the image recognition device 3 described above, namely cross-checking and prediction.

With reference to Figs. 6 and 7, the first mode of operation of the image recognition device 1 will next be explained in more detail. The method is generally indicated at 50 in Fig. 6. First, at step 51, the image data, i.e., only the image data, is analyzed in a conventional way, leading to a preliminary object recognition at step 52. While not the focus of the present work, it should be noted that the analysis of image data at step 51 may include all methods that are employed in conventional image recognition devices. For example, the analysis will typically include filtering the image in various ways, including calculating a convolution of the image with, e.g., a Laplace of Gaussian filter kernel or a Gaussian filter kernel, calculating color probability distributions, or applying the Canny-operator to the image. Subsequently, the parameters of a model for the object to be identified are determined so as to establish the model that is most consistent with the image data. The latter step typically will involve calculating a figure of merit that quantifies whether a model having a specific set of parameters is consistent with the image data. The figure of merit may be calculated based on one of or, typically, a combination of several cues that may be selected from a lane marker cue indicative of road markings, a road edge cue indicative of a road edge structure, a road color cue indicative of the typical road color, a non-road color cue indicative of image regions having colors different from the road color, a road width cue indicative of the road width and an elastic lane cue that is useful in forcing the vehicle onto the correct lane in a road having a plurality of lanes. Further, one of the cues may also be derived from a comparison of the predicted object position, shape or orientation, which has been established from the digital map, and of the position, shape or orientation of the structure in the image currently investigated, thereby assigning a probability to this structure. Once a good set of parameters has been established, i.e., a set for which the corresponding model for the object to be identified is fairly consistent with the image data, a preliminary object recognition has been achieved. Conventional image recognition methods terminate at step 52.

By contrast, according to the method of Fig. 6, the preliminarily recognized object is verified by comparison with digital map information at step 53. The verifying in step 53 may be implemented in various ways, as will be explained next.

Referring to Fig. 7, an exemplary method, generally indicated at 60, is shown in which the verifying step of the method 50 of Fig. 6 is implemented by cross-checking whether the position of the preliminarily recognized object is consistent with digital map information. The steps 61 and 62 of analyzing image data and preliminary object recognition are identical to steps 51 and 52, respectively. Next, at step 63, the object position of the preliminarily recognized object is determined. For extended objects, this step may include determining the area covered by the preliminarily recognized object. At step 64, processing means 3 of the image recognition device 1 verifies whether the preliminary object position is consistent with the digital map. For this purpose, the processing means 3 determines in which regions of the image the object is expected to be located, as explained with reference to Fig. 3 above, where the regions in which road edges and road markings are expected are schematically indicated at 29. If the position of the preliminarily recognized object is consistent with the digital map information, the object is verified and recognized at step 65, and the result of the image recognition may be output, e.g., to navigation system 2. In contrast, if the position of the preliminarily recognized object is inconsistent with the digital map, the preliminarily recognized object is discarded at step 66. In this case, the image may be re-analyzed, i.e., process 60 may be started again.

By cross-checking the results of preliminary object recognition that is based on image data only with digital map information, the probability of incorrectly identifying an object in the image is reduced, thus enhancing image recognition accuracy.

It should be noted that, while the cross-checking has been explained with reference to the object position above, other parameters may also be employed for cross-checking preliminarily recognized objects with digital map information. For example, the width of the road determined from image data may be compared with a corresponding information stored in the digital map information, such as a width of the road or a road type, which latter typically allows one to establish a bound on the road width.

Turning to Fig. 8, another mode of operation for image recognition device 1 will be explained next. The method is generally indicated at 70.

First, at step 71, digital map information is evaluated in order to predict a property of an object to be identified at step 72. This object property may be one or a combination of several of a variety of properties, including the position of the object in the image, the shape of the object in the image, or the orientation of the object in the image. If the analysis of the image data is based on fitting a model of the object to the image data, the object property may also be a prediction for one of the parameters of the model. Subsequently, at step 73, the image data is analyzed based on the predicted object property. The specific implementation of step 73 will be dependent on the object property that is predicted at step 72, and the method generally used for image data analysis.

With reference to Fig. 9, a method 80 that is a specific implementation of the general method shown in Fig. 8 will be described in more detail. First, at step 81, the object to be recognized in the image is identified in the digital map, and information corresponding to the object is extracted from the digital map information. Based on this information, at step 82, the position of the object on the image is predicted. For an extended object, such as a lane marker or a road edge, the prediction of the object position will typically include identifying an extended region or area in the image in which the object is likely to be found. Based on the predicted object position, at step 83, a sub-portion of the image data is selected for subsequent analysis, which sub-portion of the image data corresponds to the portion of the image in which the object is likely to be located. Referring again to Fig. 3, these regions are schematically indicated at 29. At step 84, the sub-portion of the image data that has been selected at step 83 is analyzed in order to recognize the object at step 85. The result of the image recognition, i.e., the precise position and type of the recognized object, may subsequently be output to other devices, such as navigation system 2.

In the method shown schematically in Figs. 8 and 9, the digital map information is employed to facilitate a subsequent analysis of the image data. In this way, not only the accuracy, but also the speed of the image recognition task may be improved.

While in the exemplary implementation of the method of Fig. 9 the object position on the image is predicted to facilitate image data analysis, the operation of the image recognition device 1 is not restricted thereto. As indicated above, other object properties, such as the shape and/or orientation of the object or an object boundary may additionally be employed to facilitate image recognition. Returning to the example of Fig. 5, even when the distance d of the vehicle from the road turnoff is not precisely known, the information comprised by the digital map and the vehicle position allows the processing means 3 to establish an angular range in which the direction of the road marking of road 42 is likely to be located. The image data may then subsequently be analyzed with particular view to structures having such orientation. In cases in which the analysis of the image data is again based on fitting a model to the image data, information on the object extracted from the digital map information may be used to restrict the range of possible model parameters. For example, for the situation shown schematically in Fig. 5, information on the distance d from the road turnoff, the angle α of the road turnoff, and the width wₜ of road 42 may all be employed to restrict corresponding parameters that are used for modeling the road edges of road 42 in image 40.

It should be emphasized that, while the method of Fig. 9 only harnesses the prediction of the object position to facilitate the analysis of the image data, a combination of object parameters may be employed for this purpose. For example, the digital map information may allow the processing means 3 of image recognition device 1 to both predict an object position on the image and a likely shape of the object. In this case, the analysis of image data may not only be restricted to a sub-portion of the image data, but may further be restricted to objects located within this sub-portion and having specific shapes.

The above explanations with reference to Figs. 3-9 have been based on the assumption that the area or region that corresponds to the area shown in the image is known. Identifying such a relevant portion of a digital map is one of the standard features of navigation systems. More specifically, based on the output of the position determining means 8, the processing unit 6 of navigation system 2 is adapted to determine the relevant portion of the digital map that corresponds to a neighborhood of the vehicle. Further, the orientation of the vehicle relative to the map is also frequently established automatically, since the navigation system checks the motion of the vehicle.

Alternatively, a separate compass device may be provided for this purpose. Based on the vehicle orientation, the relevant map portion that corresponds to the field of view of camera unit 4 may be selected and, e.g., stored in the memory means 5 of the image recognition device 1.

The results of image recognition will be output from image recognition device 1 to a navigation system 2 in order to facilitate various navigation functionalities.

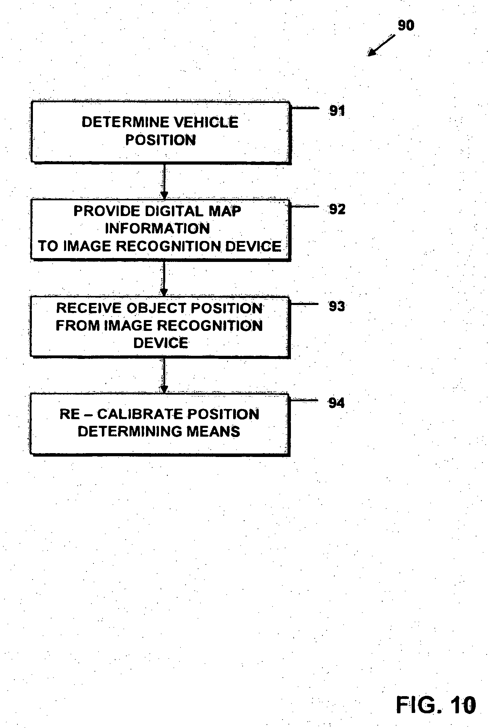

As will be explained with reference to Fig. 10, which shows a method 90, according to which the navigation system 2 operates, the results provided by image recognition device 1 may in particular be employed for improving the accuracy with which the position of the vehicle is determined. For the purpose of determining a vehicle position, conventional navigation systems employ a position determining means that may include, e.g., a GPS receiver and/or a gyroscopic device. The accuracy of position determination achievable by these devices may, however, be insufficient in some cases. In particular, for close-by objects, an analysis of the image data that leads to determining a distance of the object from the current vehicle position may be a more precise way of determining the vehicle position than the routine of the standard position determining means 8 of the navigation system.

Reverting to the example of Fig. 5, once the road turnoff has been recognized using one of the methods explained with reference to Figs. 6-9 above, a precise value of the distance of the vehicle from the road turnoff may be established based on the recognized turnoff. The relative position is fed back into the navigation system. By comparison of the distance established from digital map information and the output of the position determining means 8 with the, presumably more precise, distance established based on image data, the position determining means may be recalibrated. This method, generally indicated at 90, is shown schematically in Fig. 10. First, at step 91, the position determining means 8 of the navigation system 2 determines a current vehicle position, and the navigation system 2 provides digital map information selected based on the current vehicle position to the image recognition device at step 92. The image recognition device then identifies an object in the image according to one of the methods described above, and provides the object position to the navigation system which receives the information at step 93. Finally, at step 94, the position determined by navigation system 2 may be recalibrated based on the input of the image recognition device.

Of course, a wide variety of other applications of the results provided by image recognition devices as described herein are also conceivable in automotive environments.

As shown in Fig. 1, the image recognition device 1 of the present invention may be a modular device that comprises its own processing means and memory means as well as camera unit. However, several of the resources required by the image recognition device may also be shared with other systems or devices used in automotive environments. For example, the processing means 3 may be adapted to access a memory unit of the navigation system, in which case it is not necessary to provide a separate memory or storage unit in the image recognition device. Further, the memory means could also be partially integrated with the camera unit 4, i.e., the portion of the memory means that stores image data could be a part of the camera unit. Still further, the image recognition device does not necessarily have to be a separate device, but may also be fully integrated, e.g., with the navigation system 2. In this case, the processing unit 6 of the navigation system is adapted to perform both standard navigation tasks and image recognition tasks.

While the various exemplary embodiments of the present invention have been described with reference to recognizing objects such as roads or structures that are related to roads in an image, the present invention is not restricted thereto. Rather, the principles of the present invention may be applied to recognizing or identifying any structure on which information is provided in the digital map information, such as buildings.

Further, while image recognition for navigation systems onboard of vehicles is anticipated to be one important field of application of the present invention, the present invention is not restricted to this field, either. Rather, it may be applied to any situation in which objects have to be recognized in an image, and map information corresponding to at least a portion of the image is available.

In summary, according to the present invention, methods and systems are provided which evaluate both digital map information and image data in order to recognize an object in an image. Thereby, the speed and accuracy of the image recognition may be improved.

## Claims

1. A method for recognizing an object in an image captured using a camera unit (4) installed in a vehicle, comprising the steps of
retrieving image data corresponding to said image (20; 30; 40),
retrieving digital map information, wherein the digital map information comprises map information (25; 34; 43) on at least a portion of an area represented by said image and wherein the digital map information comprises information (w; d; w, wₜ, d, α) on said object (33; 45), wherein the information (w; d; w, wₜ, d, α) on said object (33; 45) comprised by said digital map information includes information on a position of said object (33; 45), evaluating the image data and the digital map information (25; 34; 43) to recognize said object (33; 45), wherein both the image data and the digital map information are evaluated to recognize said object (33; 45), and providing a result of said evaluating the image data and the digital map information to a navigation system (2),
**characterized in that** said result of said evaluating provided to the navigation system (2) includes information on a distance of said object (33; 45) from a current vehicle position of the vehicle,
and
said evaluating the image data is restricted to a sub-portion (29) of the image data selected based on the information on the position of said object (33; 45).

2. The method according to claim 1,
**characterized in that**
said evaluating the image data and the digital map information includes evaluating the image data to recognize said object (33; 45) and subsequently verifying, based on said digital map information, that the object (33; 45) has been correctly recognized.

3. The method according to claim 1 or 2,
**characterized in that**
said information (w; d; w, wₜ, d, α) on said object (33; 45) comprised by said digital map information includes information on at least one of a shape or an orientation of said object (33; 45), and
said evaluating the image data and the digital map information includes evaluating the image data to recognize said object (33; 45), determining at least one of a shape or an orientation of said object (33; 45) from the image data, and comparing said at least one of a shape or an orientation of said object (33; 45) determined from the image data with said digital map information.

4. The method according to any one of the preceding claims,
**characterized in that**
said information (w; d; w, wₜ, d, α) on said object (33; 45) comprised by said digital map information includes information on the shape and/or orientation of said object (33; 45),
wherein said evaluating the image data is restricted to identifying objects (33; 45) having shapes and/or orientations selected based on said information on the shape and/or orientation of said object (33; 45).

5. The method according to any one of the preceding claims,
**characterized in that**
said evaluating the image data and the digital map information includes comparing a model of said object (33; 45) with said image data.

6. The method according to claim 5,
**characterized in that**
said model of said object (33; 45) has at least one variable parameter, and said evaluating the image data and the digital map information includes finding an optimum value for said at least one variable parameter.

7. The method according to claim 6,
**characterized in that**
said finding the optimum value for said at least one variable parameter includes Bayes filtering or particle filtering.

8. The method according to any one of the preceding claims,
**characterized in that**
said digital map information is retrieved from said navigation system (2).

9. The method according to any one of the preceding claims,
**characterized in that**
the method comprises determining said current vehicle position (27; 38; 46), wherein said retrieving digital map information is based on said current vehicle position (27; 38; 46).

10. The method according to claim 9,
**characterized in that**
the method comprises determining a current vehicle orientation, wherein said retrieving digital map information is based on said current vehicle orientation.

11. The method according to any one of the preceding claims,
**characterized in that**
the method comprises recording said image (20; 30; 40), wherein the image (20; 30; 40) shows a neighbourhood of a vehicle.

12. The method according to any one of the preceding claims,
**characterized in that**
the method comprises recalibrating a position determining means (8) of said navigation device (2) based on a comparison of a distance established from digital map information and the output of the position determining means (8) with the distance established based on image data.

13. The method according to any one of the preceding claims,
**characterized in that**
the method comprises providing driving instructions to a driver, or alerting a driver, or controlling a vehicle based on a result of said evaluating the image data and the digital map information.

14. The method according to any one of the preceding claims,
**characterized in that**
said object (33; 45) is selected from a group comprising a road intersection, a road turnoff (42, 45), and a traffic sign.

15. An image recognition device for recognizing an object (33; 45) in an image, comprising
a camera unit (4) installed in a vehicle (10) configured to capture said image (20; 30; 40),
memory means (5) for storing image data corresponding to said image (20; 30; 40) and for storing digital map information, wherein the digital map information comprises map information (25; 34; 43) on at least a portion of an area represented by said image and wherein the digital map information (w; d; w, wₜ, d, α) comprises information on said object (33; 45), wherein said information (w; d; w, wₜ, d, α) on said object (33; 45) comprised by said digital map information includes information on a position of said object (33; 45), and
processing means (3) coupled to said memory means (5), which are configured to perform an evaluation of the image data and the digital map information to recognize said object (33; 45), wherein both the image data and the digital map information are evaluated to recognize the object (33; 45), wherein the image recognition device (1) is configured to provide a result of said evaluation of the image data and the digital map information to a navigation system (2), **characterized in that** said result of said evaluation provided to the navigation system (2)
includes information on a distance of said object (33; 45) from a current vehicle position of the vehicle,
and
the processing means (3) is configured to perform the evaluation on only a sub-portion (29) of said image data selected based on the information on the position of said object (33; 45).

16. The image recognition device according to claim 15,
**characterized in that**
said processing means (3) evaluates the image data to recognize said object (33; 45) and subsequently verifies, based on said digital map information, that the object (33; 45) has been correctly recognized.

17. The image recognition device according to claim 15 or 16,
**characterized in that**
said information (w; d; w, wₜ, d, α) on said object (33; 45) comprised by said digital map information includes information on at least one of a shape or an orientation of said object (33; 45), and
said processing means (3) evaluates the image data to recognize said object (33; 45), determines at least one of a shape or an orientation of said object (33; 45) from the image data, and compares said at least one of a shape or an orientation of said object (33; 45) determined from the image data with said digital map information.

18. The image recognition device according to any one of claims 15-17,
**characterized in that**
said processing means (3) compares a model of said object (33; 45) with said image data to recognize said object (33; 45).

19. The image recognition device according to claim 18,
**characterized in that**
said model of said object (33; 45) has at least one variable parameter, and said processing means (3) finds an optimum value for said at least one variable parameter.

20. The image recognition device according to claim 19,
**characterized in that**
said processing means (3) employs a Bayes filter or a particle filter to find said optimum value for said at least one variable parameter.

21. The image recognition device according to any one of claims 15-20,
**characterized in that**
said device comprises position determining means (8) for determining said current vehicle position (27; 38; 46),
wherein the position determining means (8) is coupled to the processing means (3) and the processing means (3) is adapted to select a portion of the digital map information based on the current vehicle position.

22. The image recognition device according to claim 21,
**characterized in that**
said device comprises orientation determining means (6, 8) for determining a current vehicle orientation,
wherein the orientation determining means (6, 8) is coupled to the processing means (3) and the processing means (3) is adapted to select a portion of the digital map information based on the current vehicle orientation.

23. The image recognition device according to any one of claims 15-22,
**characterized in that**
the camera unit is coupled to said memory means (5) for providing said image to said memory means (5).

24. A navigation system and image recognition device assembly, comprising the image recognition device (1) according to any one of claims 15-23.

25. The navigation system and image recognition device assembly according to claim 24, comprising
a storage unit (7) for storing a digital map, wherein the image recognition device (1) is coupled to the storage unit (7) to retrieve at least a portion of said digital map therefrom.

26. The navigation system and image recognition device assembly according to claim 24 or 25, comprising
an optical or acoustical output unit (9) for outputting driving instructions or warning signals to a driver,
wherein said driving instructions or warning signals are output in dependence on said object (33; 45) recognized by said image recognition device (1).

27. The navigation system and image recognition device assembly according to any one of claims 24-26,
wherein said navigation system (2) comprises position determining means (8) for determining said current vehicle position,
wherein the image recognition device (1) provides position information on said recognized object (33; 45) to said position determining means (8) and said position determining means (8) improves position determining accuracy based on said position information on said recognized object (33; 45).

## Patentansprüche

1. Verfahren zur Erkennung eines Objekts auf einem Bild, das unter Verwendung einer in einem Fahrzeug installierten Kameraeinheit (4) aufgenommen wurde, wobei das Verfahren die folgenden Schritte umfasst:
Abrufen von Bilddaten, die dem Bild (20; 30; 40) entsprechen,
Abrufen von digitalen Abbildungsinformationen, wobei die digitalen Abbildungsinformationen Abbildungsinformationen (25; 34; 43) auf mindestens einem Abschnitt eines Bereichs umfassen, der von dem Bild wiedergegeben wird, und wobei die digitalen Abbildungsinformationen Informationen (w; d; w, wₜ, d, α) zu dem Objekt (33; 45) umfassen, wobei die von den digitalen Abbildungsinformationen umfassten Informationen (w; d; w, wₜ, d, α) zu dem Objekt (33; 45) Informationen zu einer Position des Objekts (33;45) enthalten,
Auswertung der Bilddaten und der digitalen Abbildungsinformationen (25; 34; 43) zur Erkennung des Objekts (33; 45), wobei sowohl die Bilddaten als auch die digitalen Abbildungsinformationen zur Erkennung des Objekts (33; 45) ausgewertet werden, und
Bereitstellen eines Ergebnisses der Auswertung der Bilddaten und der digitalen Abbildungsinformationen für ein Navigationssystem (2),
**dadurch gekennzeichnet, dass** das Ergebnis der Auswertung, das dem Navigationssystem (2) bereitgestellt wird, Informationen zu einem Abstand des Objekts (33; 45) von einer derzeitigen Fahrzeugposition des Fahrzeugs beinhaltet, und
dass die Auswertung der Bilddaten auf einen Unterabschnitt (29) der Bilddaten beschränkt ist, der basierend auf den Informationen zur Position des Objekts (33; 45) ausgewählt wird.

2. Verfahren nach Anspruch 1, **dadurch gekennzeichnet, dass** die Auswertung der Bilddaten und der digitalen Abbildungsinformationen die Auswertung der Bilddaten zur Erkennung des Objekts (33; 45) und das anschließende Überprüfen, basierend auf den digitalen Abbildungsinformationen, ob das Objekt (33; 45) richtig erkannt wurde, beinhaltet.

3. Verfahren nach Anspruch 1 oder 2, **dadurch gekennzeichnet, dass** die von den digitalen Abbildungsinformationen umfassten Informationen (w; d; w, wₜ, d, α) zu dem Objekt (33; 45) Informationen zu einer Gestalt und/oder zu einer Ausrichtung des Objekts (33; 45) beinhalten, und
dass die Auswertung der Bilddaten und der digitalen Abbildungsinformationen die Auswertung der Bilddaten zur Erkennung des Objekts (33; 45), das Bestimmen einer Gestalt und/oder einer Ausrichtung des Objekts (33; 45) anhand der Bilddaten und das Vergleichen der anhand der Bilddaten bestimmten Gestalt und/oder Ausrichtung des Objekts (33; 45) mit den digitalen Abbildungsinformationen beinhaltet.

4. Verfahren nach einem der vorhergehenden Ansprüche, **dadurch gekennzeichnet, dass** die von den digitalen Abbildungsinformationen umfassten Informationen (w; d; w, wₜ, d, α) zu dem Objekt (33; 45) Informationen zu der Gestalt und/oder der Ausrichtung des Objekts (33; 45) beinhalten,
wobei die Auswertung der Bilddaten auf das Identifizieren von Objekten (33; 45) beschränkt ist, die Gestalten und/oder Ausrichtungen aufweisen, die basierend auf den Informationen zu Gestalt und/oder Ausrichtung des Objekts (33; 45) ausgewählt wurden.

5. Verfahren nach einem der vorhergehenden Ansprüche, **dadurch gekennzeichnet, dass** die Auswertung der Bilddaten und der digitalen Abbildungsinformationen das Vergleichen eines Modells des Objekts (33; 45) mit den Bilddaten beinhaltet.

6. Verfahren nach Anspruch 5, **dadurch gekennzeichnet, dass** das Modell des Objekts (33; 45) mindestens einen variablen Parameter aufweist und dass die Auswertung der Bilddaten und der digitalen Abbildungsinformationen das Finden eines optimalen Werts für den mindestens einen variablen Parameter beinhaltet.

7. Verfahren nach Anspruch 6, **dadurch gekennzeichnet, dass** das Finden des optimalen Werts für den mindestens einen variablen Parameter bayessches Filtern oder Teilchenfiltern beinhaltet.

8. Verfahren nach einem der vorhergehenden Ansprüche, **dadurch gekennzeichnet, dass** die digitalen Abbildungsinformationen aus dem Navigationssystem (2) abgerufen werden.

9. Verfahren nach einem der vorhergehenden Ansprüche, **dadurch gekennzeichnet, dass** das Verfahren das Bestimmen der derzeitigen Fahrzeugposition (27; 38; 46) umfasst, wobei das Abrufen der digitalen Abbildungsinformationen auf der derzeitigen Fahrzeugposition (27; 38; 46) basiert.

10. Verfahren nach Anspruch 9, **dadurch gekennzeichnet, dass** das Verfahren das Bestimmen einer derzeitigen Fahrzeugausrichtung umfasst, wobei das Abrufen der digitalen Abbildungsinformationen auf der derzeitigen Fahrzeugausrichtung basiert.

11. Verfahren nach einem der vorhergehenden Ansprüche, **dadurch gekennzeichnet, dass** das Verfahren das Aufnehmen des Bilds (20; 30; 40) umfasst, wobei das Bild (20; 30; 40) eine Umgebung eines Fahrzeugs zeigt.

12. Verfahren nach einem der vorhergehenden Ansprüche, **dadurch gekennzeichnet, dass** das Verfahren das Nachkalibrieren eines Positionsbestimmungsmittels (8) der Navigationsvorrichtung (2) basierend auf einem Vergleich eines anhand der digitalen Abbildungsinformationen festgelegten Abstands und der Ausgabe des Positionsbestimmungsmittels (8) mit dem anhand der Bilddaten festgelegten Abstand umfasst.

13. Verfahren nach einem der vorhergehenden Ansprüche, **dadurch gekennzeichnet, dass** das Verfahren das Bereitstellen von Fahranweisungen für einen Fahrer oder das Warnen eines Fahrers oder das Steuern eines Fahrzeugs basierend auf einem Ergebnis der Auswertung der Bilddaten und der digitalen Abbildungsinformationen umfasst.

14. Verfahren nach einem der vorhergehenden Ansprüche, **dadurch gekennzeichnet, dass** das Objekt (33; 45) aus einer Gruppe ausgewählt ist, die eine Straßenkreuzung, eine Straßenabbiegung (42, 45) und ein Verkehrsschild umfasst.

15. Bilderkennungsvorrichtung zur Erkennung eines Objekts (33; 45) in einem Bild, umfassend
eine in einem Fahrzeug (10) installierte Kameraeinheit (4), die dazu ausgelegt ist, das Bild (20; 30; 40) aufzunehmen,
ein Speichermittel (5) zum Speichern von dem Bild (20; 30; 40) entsprechenden Bilddaten und zum Speichern von digitalen Abbildungsinformationen, wobei die digitalen Abbildungsinformationen Abbildungsinformationen (25; 34; 43) auf mindestens einem Abschnitt eines Bereichs umfassen, der von dem Bild wiedergegeben wird, und wobei die digitalen Abbildungsinformationen Informationen (w; d; w, wₜ, d, α) zu dem Objekt (33; 45) umfassen, wobei die von den digitalen Abbildungsinformationen umfassten Informationen (w; d; w, wₜ, d, α) zu dem Objekt (33; 45) Informationen zu einer Position des Objekts (33; 45) beinhalten, und
ein Verarbeitungsmittel (3), das an das Speichermittel (5) gekoppelt ist und das dazu ausgelegt ist, eine Auswertung der Bilddaten und der digitalen Abbildungsinformationen zur Erkennung des Objekts (33; 45) durchzuführen, wobei sowohl die Bilddaten als auch die digitalen Abbildungsinformationen zur Erkennung des Objekts (33; 45) ausgewertet werden, wobei die Bilderkennungsvorrichtung (1) dazu ausgelegt ist, einem Navigationssystem (2) ein Ergebnis der Auswertung der Bilddaten und der digitalen Abbildungsinformationen bereitzustellen,
**dadurch gekennzeichnet, dass** das dem Navigationssystem (2) bereitgestellte Ergebnis der Auswertung Informationen zu einem Abstand des Objekts (33; 45) von einer derzeitigen Fahrzeugposition des Fahrzeugs beinhaltet, und
dass das Verarbeitungsmittel (3) dazu ausgelegt ist, die Auswertung nur an einem Unterabschnitt (29) der Bilddaten basierend auf den Informationen zu der Position des Objekts (33; 45) durchzuführen.

16. Bilderkennungsvorrichtung nach Anspruch 15, **dadurch gekennzeichnet, dass** das Verarbeitungsmittel (3) die Bilddaten zur Erkennung des Objekts (33; 45) auswertet und anschließend basierend auf den digitalen Abbildungsinformationen überprüft, ob das Objekt (33; 45) richtig erkannt wurde.

17. Bilderkennungsvorrichtung nach Anspruch 15 oder 16, **dadurch gekennzeichnet, dass** die von den digitalen Abbildungsinformationen umfassten Informationen (w; d; w, wₜ, d, α) zu dem Objekt (33; 45) Informationen zu einer Gestalt und/oder Ausrichtung des Objekts (33; 45) beinhalten, und
das Verarbeitungsmittel (3) die Bilddaten zur Erkennung des Objekts (33; 45) auswertet, eine Gestalt und/oder Ausrichtung des Objekts (33; 45) anhand der Bilddaten bestimmt und eine anhand der Bilddaten bestimmte Gestalt und/oder Ausrichtung des Objekts (33; 45) mit den digitalen Abbildungsinformationen vergleicht.

18. Bilderkennungsvorrichtung nach einem der Ansprüche 15-17, **dadurch gekennzeichnet, dass** das Verarbeitungsmittel (3) ein Modell des Objekts (33; 45) mit den Bilddaten zur Erkennung des Objekts (33; 45) vergleicht.

19. Bilderkennungsvorrichtung nach Anspruch 18, **dadurch gekennzeichnet, dass** das Modell des Objekts (33; 45) mindestens einen variablen Parameter aufweist und dass das Verarbeitungsmittel (3) einen optimalen Wert für den mindestens einen variablen Parameter findet.

20. Bilderkennungsvorrichtung nach Anspruch 19, **dadurch gekennzeichnet, dass** das Verarbeitungsmittel (3) einen bayesschen Filter oder Teilchenfilter zum Finden des optimalen Werts für den mindestens einen variablen Parameter verwendet.

21. Bilderkennungsvorrichtung nach einem der Ansprüche 15-20, **dadurch gekennzeichnet, dass** die Vorrichtung ein Positionsbestimmungsmittel (8) zum Bestimmen der derzeitigen Fahrzeugposition (27; 38; 46) umfasst,
wobei das Positionsbestimmungsmittel (8) an das Verarbeitungsmittel (3) gekoppelt ist und das Verarbeitungsmittel (3) dazu ausgelegt ist, einen Teil der digitalen Abbildungsinformationen basierend auf der derzeitigen Fahrzeugposition auszuwählen.

22. Bilderkennungsvorrichtung nach Anspruch 21, **dadurch gekennzeichnet, dass** die Vorrichtung Ausrichtungsbestimmungsmittel (6, 8) zum Bestimmen einer derzeitigen Fahrzeugausrichtung umfasst,
wobei die Ausrichtungsbestimmungsmittel (6, 8) an das Verarbeitungsmittel (3) gekoppelt sind und das Verarbeitungsmittel (3) dazu ausgelegt ist, einen Teil der digitalen Abbildungsinformationen basierend auf der derzeitigen Fahrzeugausrichtung auszuwählen.

23. Bilderkennungsvorrichtung nach einem der Ansprüche 15-22, **dadurch gekennzeichnet, dass** die Kameraeinheit an das Speichermittel (5) gekoppelt ist, um dem Speichermittel (5) das Bild bereitzustellen.

24. Navigationssystem und Bilderkennungsvorrichtungsaufbau, umfassend die Bilderkennungsvorrichtung (1) nach einem der Ansprüche 15-23.

25. Navigationssystem und Bilderkennungsvorrichtungsaufbau nach Anspruch 24, umfassend
eine Speichereinheit (7) zum Speichern einer digitalen Abbildung, wobei die Bilderkennungsvorrichtung (1) an die Speichereinheit (7) gekoppelt ist, um mindestens einen Teil der digitalen Abbildung daraus abzurufen.

26. Navigationssystem und Bilderkennungsvorrichtungsaufbau nach Anspruch 24 oder 25, umfassend
eine optische oder akustische Ausgabeeinheit (9) zur Ausgabe von Fahranweisungen oder Warnsignalen an einen Fahrer,
wobei die Fahranweisungen oder Warnsignale in Abhängigkeit von dem Objekt (33; 45), das von der Bilderkennungsvorrichtung (1) erkannt wird, ausgegeben werden.

27. Navigationssystem und Bilderkennungsvorrichtungsaufbau nach einem der Ansprüche 24-26,
wobei das Navigationssystem (2) ein Positionsbestimmungsmittel (8) zum Bestimmen der derzeitigen Fahrzeugposition umfasst,
wobei die Bilderkennungsvorrichtung (1) dem Positionsbestimmungsmittel (8) Positionsinformationen zu dem erkannten Objekt (33; 45) bereitstellt und das Positionsbestimmungsmittel (8) die Genauigkeit der Positionsbestimmung basierend auf den Positionsinformationen zu dem erkannten Objekt (33; 45) verbessert.

## Revendications

1. Procédé pour reconnaître un objet dans une image capturée en utilisant une unité de caméra (4) installée dans un véhicule, comprenant les étapes suivantes
la récupération de données D'IMAGE correspondant à ladite image (20 ; 30 ; 40),
la récupération d'informations de cartographie numérique, dans lequel les informations de cartographie numérique comprennent des informations de cartographie (25 ; 34 ; 43) sur au moins une portion d'une zone représentée par ladite image et dans lequel les informations de cartographie numérique comprennent des informations (w ; d ; w, wₜ, d, α) sur ledit objet (33 ; 45), dans lequel les informations (w ; d ; w, wₜ, d, α) sur ledit objet (33 ; 45) comprises dans lesdites informations de cartographie numérique comprennent des informations sur une position dudit objet (33 ; 45),
l'évaluation des données d'image et des informations de cartographie numérique (25 ; 34 ; 43) pour reconnaître ledit objet (33 ; 45), dans lequel à la fois les données d'image et les informations de cartographie numérique sont évaluées pour reconnaître ledit objet (33 ; 45), et
la fourniture d'un résultat de ladite évaluation des données d'image et des informations de cartographie numérique à un système de navigation (2),
**caractérisé en ce que** ledit résultat de ladite évaluation fourni au système de navigation (2) comprend des informations sur une distance entre ledit objet (33 ; 45) et une position de véhicule actuelle du véhicule,
et
ladite évaluation des données d'image est limitée à une sous-portion (29) des données d'image sélectionnées sur la base de informations sur la position dudit objet (33 ; 45).

2. Procédé selon la revendication 1,
**caractérisé en ce que**
ladite évaluation des données d'image et des informations de cartographie numérique comprend l'évaluation des données d'image pour reconnaître ledit objet (33 ; 45) et successivement la vérification, sur la base desdites informations de cartographie numérique, que l'objet (33 ; 45) a été correctement reconnu.

3. Procédé selon la revendication 1 ou 2,
**caractérisé en ce que**
lesdites informations (w ; d ; w, wₜ, d, α) sur ledit objet (33 ; 45) comprises par lesdites informations de cartographie numérique comprennent des informations sur au moins une parmi une forme ou une orientation dudit objet (33 ; 45), et
ladite évaluation des données d'image et des informations de cartographie numérique comprend l'évaluation des données d'image pour reconnaître ledit objet (33 ; 45), la détermination d'au moins une parmi une forme ou une orientation dudit objet (33 ; 45) à partir des données d'image, et la comparaison de ladite au moins une parmi une forme ou une orientation dudit objet (33 ; 45) déterminée à partir des données d'image avec lesdites informations de cartographie numérique.

4. Procédé selon l'une quelconque des revendications précédentes,
**caractérisé en ce que**
lesdites informations (w ; d ; w, wₜ, d, α) sur ledit objet (33 ; 45) comprises par lesdites informations de cartographie numérique comprennent des informations sur la forme et/ou l'orientation dudit objet (33 ; 45),
dans lequel ladite évaluation des données d'image est limitée à l'identification d'objets (33 ; 45) ayant des formes et/ou des orientations sélectionnées sur la base desdites informations sur la forme et/ou l'orientation dudit objet (33 ; 45).

5. Procédé selon l'une quelconque des revendications précédentes,
**caractérisé en ce que**
ladite évaluation des données d'image et des informations de cartographie numérique comprend la comparaison d'un modèle dudit objet (33 ; 45) avec lesdites données d'image.

6. Procédé selon la revendication 5,
**caractérisé en ce que**
ledit modèle dudit objet (33 ; 45) a au moins un paramètre variable, et
ladite évaluation des données d'image et des informations de cartographie numérique comprend la recherche d'une valeur optimale pour ledit au moins un paramètre variable.

7. Procédé selon la revendication 6,
**caractérisé en ce que**
ladite recherche de la valeur optimale pour ledit au moins un paramètre variable comprend un filtrage de Bayes ou un filtrage particulaire.

8. Procédé selon l'une quelconque des revendications précédentes,
**caractérisé en ce que**
lesdites informations de cartographie numérique sont récupérées à partir dudit système de navigation (2).

9. Procédé selon l'une quelconque des revendications précédentes,
**caractérisé en ce que**
le procédé comprend la détermination de ladite position de véhicule actuelle (27 ; 38 ; 46), dans lequel ladite récupération d'informations de cartographie numérique est basée sur ladite position de véhicule actuelle (27 ; 38 ; 46).

10. Procédé selon la revendication 9,
**caractérisé en ce que**
le procédé comprend la détermination d'une orientation de véhicule actuelle, dans lequel ladite récupération d'informations de cartographie numérique est basée sur ladite orientation de véhicule actuelle.

11. Procédé selon l'une quelconque des revendications précédentes,
**caractérisé en ce que**
le procédé comprend l'enregistrement de ladite image (20 ; 30 ; 40), dans lequel l'image (20 ; 30 ; 40) montre un environnement d'un véhicule.

12. Procédé selon l'une quelconque des revendications précédentes,
**caractérisé en ce que**
le procédé comprend le réétalonnage d'un moyen de détermination de position (8) dudit dispositif de navigation (2) sur la base d'une comparaison d'une distance établie à partir d'informations de cartographie numérique et de la sortie du moyen de détermination de position (8) avec la distance établie sur la base de données d'image.

13. Procédé selon l'une quelconque des revendications précédentes,
**caractérisé en ce que**
le procédé comprend la fourniture d'instructions de conduite à un conducteur ou l'avertissement d'un conducteur ou la commande d'un véhicule sur la base d'un résultat de ladite évaluation des données d'image et des informations de cartographie numérique.

14. Procédé selon l'une quelconque des revendications précédentes,
**caractérisé en ce que**
ledit objet (33 ; 45) est sélectionné à partir d'un groupe comprenant une intersection de route, une bretelle de route (42, 45) et un panneau de circulation.

15. Dispositif de reconnaissance d'image pour reconnaître un objet (33 ; 45) dans une image, comprenant
une unité de caméra (4) installée dans un véhicule (10), configurée pour capturer ladite image (20 ; 30 ; 40),
des moyens de mémoire (5) pour stocker des données d'image correspondant à ladite image (20 ; 30 ; 40), et pour stocker des informations de cartographie numérique, dans lequel les informations de cartographie numérique comprennent des informations de cartographie (25 ; 34 ; 43) sur au moins une portion d'une zone représentée par ladite image et dans lequel les informations de cartographie numérique (w ; d ; w, wₜ, d, α) comprennent des informations sur ledit objet (33 ; 45), dans lequel lesdites informations (w ; d ; w, wₜ, d, α) sur ledit objet (33 ; 45) comprises dans lesdites informations de cartographie numérique comprennent des informations sur une position dudit objet (33 ; 45), et
des moyens de traitement (3) couplés auxdits moyens de mémoire (5), qui sont configurés pour effectuer une évaluation des données d'image et des informations de cartographie numérique pour reconnaître ledit objet (33 ; 45),
dans lequel à la fois les données d'image et les informations de cartographie numérique sont évaluées pour reconnaître l'objet (33 ; 45),
dans lequel le dispositif de reconnaissance d'image (1) est configuré pour fournir un résultat de ladite évaluation des données d'image et des informations de cartographie numérique à un système de navigation (2),
**caractérisé en ce que** ledit résultat de ladite évaluation fourni au système de navigation (2) comprend des informations sur une distance entre ledit objet (33 ; 45) et une position de véhicule actuelle du véhicule,
et
les moyens de traitement (3) sont configurés pour effectuer l'évaluation seulement sur une sous-portion (29) desdites données d'image sélectionnées sur la base de informations sur la position dudit objet (33 ; 45).

16. Dispositif de reconnaissance d'image selon la revendication 15,
**caractérisé en ce que**
lesdits moyens de traitement (3) évaluent les données d'image pour reconnaître ledit objet (33 ; 45) et vérifient successivement, sur la base desdites informations de cartographie numérique, que l'objet (33 ; 45) a été correctement reconnu.

17. Dispositif de reconnaissance d'image selon la revendication 15 ou 16,
**caractérisé en ce que**
lesdites informations (w ; d ; w, wₜ, d, α) sur ledit objet (33 ; 45) comprises par lesdites informations de cartographie numérique comprennent des informations sur au moins une parmi une forme ou une orientation dudit objet (33 ; 45), et
lesdits moyens de traitement (3) évaluent les données d'image pour reconnaître ledit objet (33 ; 45), déterminent au moins une parmi une forme ou une orientation dudit objet (33 ; 45) à partir des données d'image, et comparent ladite au moins une parmi une forme ou une orientation dudit objet (33 ; 45) déterminée à partir des données d'image avec lesdites informations de cartographie numérique.

18. Dispositif de reconnaissance d'image selon l'une quelconque des revendications 15 à 17,
**caractérisé en ce que**
lesdits moyens de traitement (3) comparent un modèle dudit objet (33 ; 45) avec lesdites données d'image pour reconnaître ledit objet (33 ; 45).

19. Dispositif de reconnaissance d'image selon la revendication 18,
**caractérisé en ce que**
ledit modèle dudit objet (33 ; 45) a au moins un paramètre variable, et
lesdits moyens de traitement (3) recherchent une valeur optimale pour ledit au moins un paramètre variable.

20. Dispositif de reconnaissance d'image selon la revendication 19,
**caractérisé en ce que**
lesdits moyens de traitement (3) utilisent un filtre de Bayes ou un filtre particulaire pour trouver ladite valeur optimale pour ledit au moins un paramètre variable.

21. Dispositif de reconnaissance d'image selon l'une quelconque des revendications 15 à 20,
**caractérisé en ce que**
ledit dispositif comprend des moyens de détermination de position (8) pour déterminer ladite position de véhicule actuelle (27 ; 38 ; 46),
dans lequel les moyens de détermination de position (8) sont couplés aux moyens de traitement (3) et les moyens de traitement (3) sont adaptés pour sélectionner une portion des informations de cartographie numérique sur la base de la position de véhicule actuelle.

22. Dispositif de reconnaissance d'image selon la revendication 21,
**caractérisé en ce que**
ledit dispositif comprend des moyens de détermination d'orientation (6, 8) pour déterminer une orientation de véhicule actuelle,
dans lequel les moyens de détermination de position (6, 8) sont couplés aux moyens de traitement (3) et les moyens de traitement (3) sont adaptés pour sélectionner une portion des informations de cartographie numérique sur la base de l'orientation de véhicule actuelle.

23. Dispositif de reconnaissance d'image selon l'une quelconque des revendications 15 à 22,
**caractérisé en ce que**
l'unité de caméra est couplée auxdits moyens de mémoire (5) pour fournir ladite image auxdits moyens de mémoire (5).

24. Ensemble de système de navigation et dispositif de reconnaissance d'image, comprenant le dispositif de reconnaissance d'image (1) selon l'une quelconque des revendications 15 à 23.

25. Ensemble de système de navigation et dispositif de reconnaissance d'image selon la revendication 24, comprenant
une unité de stockage (7) pour stocker une carte numérique, dans lequel le dispositif de reconnaissance d'image (1) est couplé à l'unité de stockage (7) pour récupérer au moins une portion de ladite carte numérique à partir de celle-ci.

26. Ensemble de système de navigation et dispositif de reconnaissance d'image selon la revendication 24 ou 25, comprenant
une unité de sortie optique ou acoustique (9) pour délivrer en sortie des instructions de conduite ou des signaux d'avertissement à un conducteur,
dans lequel lesdites instructions de conduite ou signaux d'avertissement sont délivrés en sortie en fonction dudit objet (33 ; 45) reconnu par ledit dispositif de reconnaissance d'image (1).

27. Ensemble de système de navigation et dispositif de reconnaissance d'image selon l'une quelconque des revendications 24 à 26,
dans lequel ledit système de navigation (2) comprend des moyens de détermination de position (8) pour déterminer ladite position de véhicule actuelle,
dans lequel le dispositif de reconnaissance d'image (1) fournit des informations de position sur ledit objet reconnu (33 ; 45) auxdits moyens de détermination de position (8) et lesdits moyens de détermination de position (8) améliorent une précision de détermination de position sur la base desdites informations de position sur ledit objet reconnu (33 ; 45).
